# EUROPEAN PATENT APPLICATION

(11) **EP 2 720 482 A1**
(43) Date of publication of application: **16.04.2014**
(21) Application number: 13187713.6
(22) Date of filing: 08.10.2013
(51) Int. Cl.: H04W 8/18, H04W 4/08, H04W 84/20, H04W 4/00, H04W 76/02

(54) **Communication method, base station, and management apparatus**

(30) Priority: 11.10.2012 JP 2012226417
(71) Applicant: FUJITSU LIMITED, Kawasaki-shi, Kanagawa 211-8588 (JP)
(72) Inventor: Watanabe, Naotoshi, Kawasaki-shi, Kanagawa 211-8588 (JP)
(74) Representative: Fenlon, Christine Lesley

(57) **Abstract**

A communication method performed in a communication system including a base station and a plurality of terminals, the communication method including: transmitting, by the base station, a first signal specifying a representative terminal of an aggregation group to which member terminals of the plurality of terminals belongs, each of the member terminals on which common application is installed in common, and relaying, by the representative terminal, communications associated with the common application between a server apparatus and one or more non-representative terminals other than the representative terminal of the member terminals, the server apparatus providing service for the common application.

## Description

### FIELD

The embodiments discussed herein are related to a communication method, a base station, a management apparatus.

### BACKGROUND

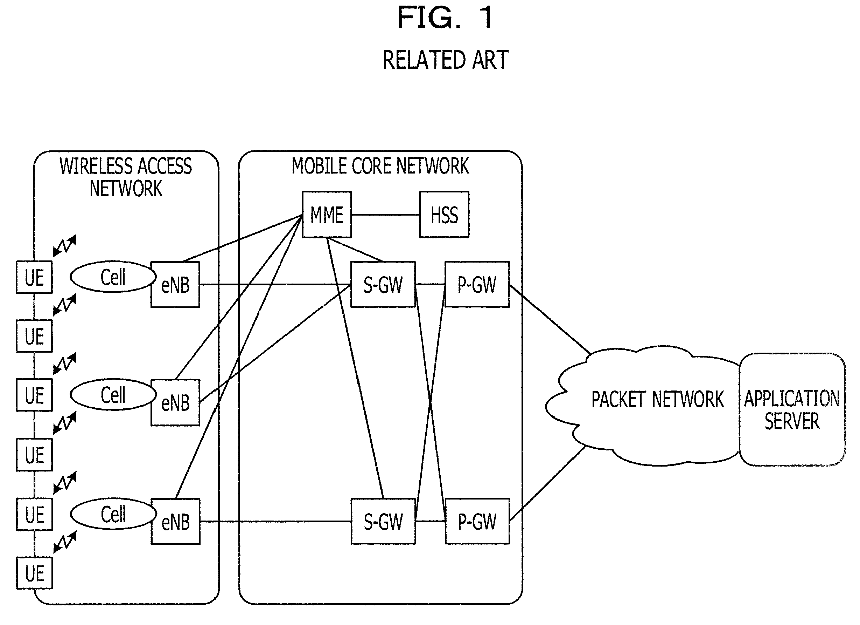

The commercial service of a Long Term Evolution (LTE) system that is a new mobile communication network system has been started (FIG. 1). As illustrated in FIG. 1, such an LTE system includes a mobile core network and a radio access network. The mobile core network is connected to an external packet network through the radio access network. In addition, the mobile core network includes a Home Subscriber Server (HSS) and a Mobility Management Entity (MME), a Serving-Gateway (S-GW), and a PDN-gateway (P-GW). In addition, the radio access network includes a base station (eNB) that is connected to the MME and the S-GW. In addition, a plurality of user terminals (UE) is accommodated in a cell that is covered by each base station.

In the above-described mobile communication network system, after a user terminal transmits communication data or when there is no data communication of the user terminal for a certain time period, a first communication channel that is established in the radio access network is released but a second communication channel that corresponds to the first communication channel and is established in the mobile core network is kept set. Therefore, power consumption of the user terminal may be reduced, space efficiency of radio resources may be improved. Here, a state in which the first communication channel and the second communication channel are established is called "communication state", and a state in which the first communication channel is established and the second communication channel is released is called "preservation state". That is, after the user terminal transmits communication data or when there is no data communication of the user terminal for the certain time period, the state transitions from the communication state to the preservation state.

3GPP TS 23.401 V11.1.0 (2012-03), "General Packet Radio Service (GPRS) enhancements for Evolved Universal Terrestrial Radio Access Network (E-UTRAN) access (Release 10)", and 3GPP TS 22.801 V12.0.0 (2011-12), "Study on non-MTC Mobile Data Applications impacts (Release 12)" are the related arts.

### SUMMARY

According to an embodiment of an aspect of the invention, a communication method performed in a communication system including a base station and a plurality of terminals, the communication method includes transmitting, by the base station, a first signal specifying a representative terminal of an aggregation group to which member terminals of the plurality of terminals belongs, each of the member terminals on which common application is installed in common, and relaying, by the representative terminal, communications associated with the common application between a server apparatus and one or more non-representative terminals other than the representative terminal of the member terminals, the server apparatus providing service for the common application.

### BRIEF DESCRIPTION OF DRAWINGS

FIG. 1 is a diagram illustrating a configuration of a mobile communication network system in the related art;

FIG. 2 is a diagram illustrating an example of a communication system according to a first embodiment;

FIG. 3 is a diagram illustrating an example of the communication system according to the first embodiment;

FIG. 4 is a block diagram illustrating an example of a management apparatus according to the first embodiment;

FIG. 5 is a block diagram illustrating an example of a management server according to the first embodiment;

FIG. 6 is a block diagram illustrating an example of a base station according to the first embodiment;

FIG. 7 is a block diagram illustrating an example of user terminal according to the first embodiment;

FIG. 8 is a block diagram illustrating an example of a gateway according to the first embodiment;

FIG. 9 is a flowchart illustrating an example of transmission processing of a message in the management server according to the first embodiment;

FIG. 10 is a diagram illustrating an example of a message that is transmitted from the management server to the management apparatus;

FIG. 11 is a flowchart illustrating an example of obtaining processing and holding processing of application subscription information in the management apparatus according to the first embodiment;

FIG. 12 is a diagram illustrating an example of a message that includes a setting request of an aggregation communication channel;

FIG. 13 is a flowchart illustrating an example of formation processing of an aggregation communication channel in the base station according to the first embodiment;

FIG. 14 is a diagram illustrating an example of a message that is transmitted from the base station to the user terminal in a communication channel formation procedure;

FIG. 15 is a diagram illustrating an example of a message that includes information on an aggregation group;

FIG. 16 is a flowchart illustrating an example of setting processing of a communication channel in the management apparatus according to the first embodiment;

FIG. 17 is a diagram illustrating an example of a message that includes a setting request of an aggregation communication channel in a downlink;

FIG. 18 is a flowchart illustrating an example of formation processing of an aggregation communication channel in the gateway according to the first embodiment;

FIG. 19 is a flowchart illustrating an example of communication channel establishing of a gateway according to a second embodiment;

FIG. 20 is a diagram illustrating an example of a message that includes a setting request of a communication channel according to the second embodiment;

FIG. 21 is a flowchart illustrating an example of setting processing of a communication channel in a management apparatus according to the second embodiment;

FIG. 22 is a flowchart illustrating an example of formation processing of an aggregation communication channel in the gateway according to the second embodiment;

FIG. 23 is a diagram illustrating a hardware configuration of the management apparatus;

FIG. 24 is a diagram illustrating a hardware configuration of the management server;

FIG. 25 is a diagram illustrating a hardware configuration of the base station;

FIG. 26 is a diagram illustrating a hardware configuration of the user terminal; and

FIG. 27 is a diagram illustrating a hardware configuration of the gateway.

### DESCRIPTION OF EMBODIMENTS

In many communication applications (hereinafter, may be simply referred to as "application") that are used in smartphone terminals that have been used widely, a keep alive message or a state update message is transmitted and receives to and from a server of the application, which is connected to an external packet network, at a fixed interval or intermittently. Therefore, it is probable that the state transitions back to the communication state again immediately due to the occurrence of next message communication even after the state transitions to the preservation state in order to reduce power consumption of the user terminal. In this case, the transition between the communication state and the preservation state occurs more often than ever. As the transition often occurs, the frequency of occurrence of control signals increases, the signals switch release and setting of the above-described second communication channel in the radio access network. As a result, signal processing capability in the mobile communication network system is tightened, so that it is probable that the service quality is degraded.

Here, in order to avoid an increase in the control signal amount, it is conceivable that a communication channel is kept set in the radio access network. However, in this case, in all user terminals, the power consumption increases undesirably. In addition, communication channel management memory to be used in the base station also increases, so that the number of user terminals that are allowed to be connected to the single base station is constrained undesirably. Such a situation is not limited to the LTE system, and for example, such a situation may occur in a base station (NB), a relay packet switch (GGSN), and a subscriber packet switch (SGSN) in a third generation (3G) system.

The technology discussed herein is made by considering the above-described points, and the object of the technology is to provide a communication system, a management apparatus, a base station, a communication apparatus, and a communication channel control method in which a control signal in the radio access network may be reduced.

The embodiments of the communication system, the management apparatus, the base station, the communication apparatus, and the communication channel control method discussed herein are described below in detail with reference to accompanying drawings. The communication system, the management apparatus, the base station, the communication apparatus, and the communication channel control method discussed herein are not limited by such embodiments. In addition, in the embodiments, the same symbol is assigned to configurations having the same function, and a duplicate description is omitted.

[First embodiment]

[Overview of a communication system]

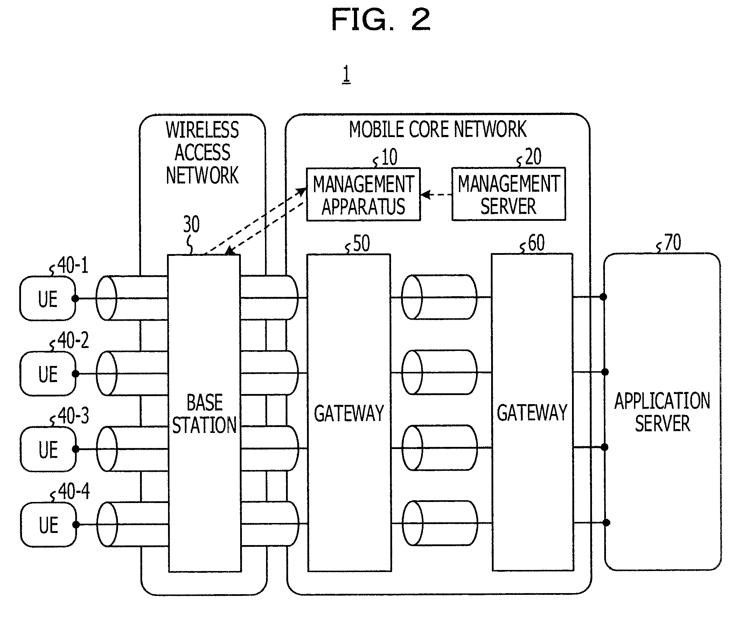

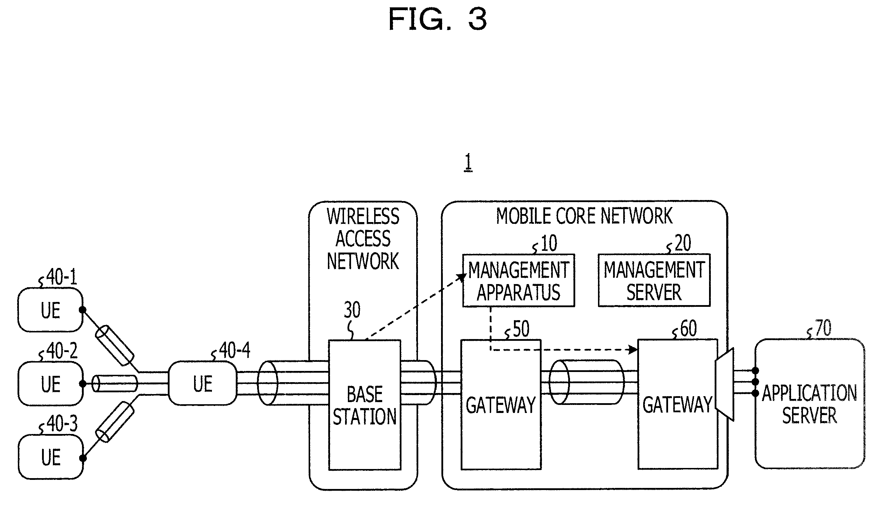

FIGs. 2 and 3 are diagrams illustrating examples of a communication system according to a first embodiment. In FIGs. 2 and 3, a communication system 1 includes a management apparatus 10, a management server (may be called a management apparatus) 20, a base station 30, user terminal 40-1 to user terminal 40-4, gateways (may be called gateway apparatuses) 50 and 60, and an application server (may be called a server apparatus) 70.

In FIG. 2, the communication system 1 that is in "communication state of a regular mode" is illustrated. That is, the communication state of the regular mode is a state in which "communication channel set" that includes a first communication channel that is in a radio access network and a second communication channel that is in a mobile core network is established for a user terminal 40 under the domination of the base station 30. Therefore, the user terminal 40 is connected to the application server 70. The first communication channel connects the user terminal 40 and the mobile core network through the base station 30. The user terminal 40 and the base station 30 are connected to each other through a wireless line, and the base station 30 and the mobile core network are connected to each other through a wired line. In addition, the second communication channel connects the gateway 50 and the gateway 60. The gateway 50 and the gateway 60 are connected to each other through a wired line. Each of the management server 20, the base station 30, and the gateway 50 is connected to the management apparatus 10 through a wired line.

In addition, in FIG. 3, the communication system 1 that is in "communication state of an aggregation mode" is illustrated. That is, the communication state of the aggregation mode is a state in which a plurality of "non-representative user terminals" each of which establishes a user terminal-to-user terminal communication channel with "representative user terminal" in "aggregation group" that includes a plurality of user terminals 40 performs communication through the representative user terminal by using first and second communication channels of the representative user terminal. In FIG. 3, the user terminal 40-1 to the user terminal 40-4 constitute one aggregation group, and the user terminal 40-4 is selected as the representative user terminal. Here, selection of the base station 30 to which the aggregation mode is applied is performed by the management apparatus 10 on the basis of certain criteria. In addition, selection of an aggregation group is performed by the management apparatus 10 on the basis of the type of an application. In addition, a representative user terminal in the aggregation group is selected by the base station 30 on the basis of certain criteria. By employing the communication state of the aggregation mode, the number of communication channels may be reduced, so that the number of control signals may be reduced. In FIG. 3, a set is merely described above that includes a representative user terminal and a non-representative user terminal group that performs communication through the representative user terminal, and a plurality of sets may be formed under the domination of an identical base station. The representative user terminal and the non-representative user terminals may be called member terminal.

A case in which the communication system is an LTE system is described as an example herein.

[Configuration of the management apparatus]

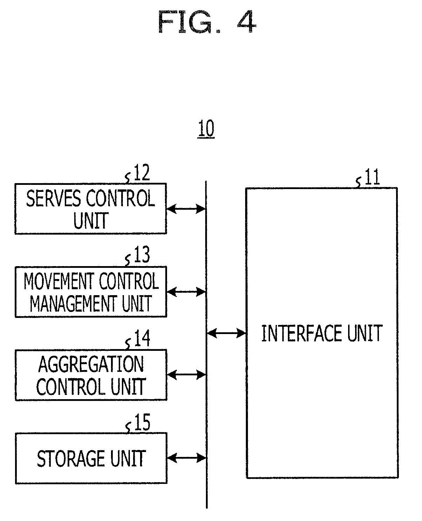

FIG. 4 is a block diagram illustrating an example of the management apparatus according to the first embodiment. In FIG. 4, the management apparatus 10 includes an interface unit 11, a service control unit 12, a movement control management unit 13, an aggregation control unit 14, and a storage unit 15. The interface unit 11, the service control unit 12, the movement control management unit 13, the aggregation control unit 14, and the storage unit 15 are connected to each other through a bus.

The interface unit 11 terminates a layer 1(L1)/layer 2(L2) protocol, and transmits and receives a signal to and from each of the management server 20, the base station 30, and the gateway 50.

The service control unit 12 executes signal processing for a signal that is transmitted from the management server 20, the base station 30, the user terminals 40, and the gateway 50 or a signal that is transmitted to the management server 20, the base station 30, the user terminals 40, and the gateway 50. Here, the gateway 50 starts up a signal processing procedure between the gateway 50 and the gateway 60, on the basis of a signal processing sequence between the gateway 50 and the service control unit 12, and performs setting of the first communication channel, and the like. Therefore, provision of mobile communication service in the communication system 1 is achieved.

For example, the service control unit 12 receives a message from the management server 20 through the interface unit 11 and causes the storage unit 15 to store application subscription information that is included in the message. That is, in the correspondence table that is stored in the storage unit 15, identification information of the user terminal 40 and identification information of an application that is installed in the user terminal 40 are associated with each other and stored.

In addition, when a setting procedure of a communication channel occurs for the user terminal 40 that is a processing target, the service control unit 12 determines whether or not application subscription information that corresponds to the user terminal 40 that is a processing target is stored in the correspondence table of the storage unit 15.

In addition, the service control unit 12 obtains location information of the user terminal 40 and user information of a communication channel and the like, and causes the storage unit 15 to stores the pieces of information.

The movement control management unit 13 manages the connection state of the user terminal 40. In addition, the movement control management unit 13 controls communication route setting to the user terminal 40 and communication route switching that is caused by movement of the user terminal 40.

The aggregation control unit 14 recognizes the user terminal 40 that is an aggregation target on the basis of a certain condition, and manages the user terminal 40 in an aggregation candidate table that is stored in the storage unit 15. The certain condition is, for example, as follows. That is, the user terminal 40 is user terminal in which a certain application is installed and that exists under the domination of the specific base station 30 that is defined beforehand (for example, a base station in which a signaling amount is a certain value or more and convergence occurs easily). Alternatively, the user terminal 40 is user terminal in which a certain application is installed and that exists under the domination of the base station 30 in which a movement frequency of the user terminal 40 that exists under the domination of the base station 30 is less than a certain value (for example, a base station in which average residence time of the user terminal 40 is more than a certain time). The aggregation candidate table is provided for each combination of identification information of the application that is installed in the user terminal 40, the base station 30 under the domination of which the user terminal 40 exists, and the gateway 50 to which the base station 30 is connected.

In addition, the aggregation control unit 14 determines whether or not the aggregation condition is satisfied for each of the aggregation candidate tables, and transmits a setting request of an aggregation communication channel, to the base station 30 that corresponds to the aggregation candidate table for which the aggregation condition is satisfied. Here, the aggregation condition is that the number of pieces of user terminal 40 that enters the aggregation candidate table becomes a certain value or more.

Therefore, a group that includes the plurality of user terminal 40 in which an identical type of applications are installed is selected. Here, the case in which applications are identical includes a case in which the applications are completely the same, and for example, a case in which the applications belong to the same category such as social networking service (SNS).

In addition, the aggregation control unit 14 receives information on an aggregation group from the base station 30 through the interface unit 11 and the service control unit 12. In addition, the aggregation control unit 14 forms a setting request of an aggregation communication channel in a downlink on the basis of the received information on the aggregation group and transmits the formed setting request to the gateway 60. Pieces of identification information of representative user terminal and all pieces of non-representative user terminal that are included in the aggregation group are included in the setting request of the aggregation communication channel in the downlink.

[Configuration of the management server]

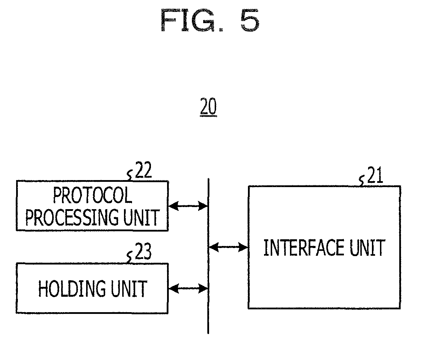

FIG. 5 is a block diagram illustrating an example of the management server according to the first embodiment. In FIG. 5, the management server 20 includes an interface unit 21, a protocol processing unit 22, and a holding unit 23. The interface unit 21, the protocol processing unit 22, and the holding unit 23 are connected to each other through a bus.

The interface unit 21 terminates the L1/ L2 protocol and transmits and receives a signal to and from the management apparatus 10.

The protocol processing unit 22 executes the signal processing for a signal that is transmitted from the management apparatus 10 or a signal that is transmitted to the management apparatus 10.

For example, when a transmission condition of a message is satisfied, the protocol processing unit 22 searches a subscription information table that is stored in the holding unit 23 on the basis of identification information of the user terminal 40 that is a search target. As a result of the search, the protocol processing unit 22 obtains application subscription information of the user terminal 40 that is a search target, and forms a message that includes the obtained application subscription information. Here, service contract information or the like that includes identification information of an application that is installed in the user terminal 40 is stored in the subscription information table for each of the user terminal 40.

[Configuration of the base station]

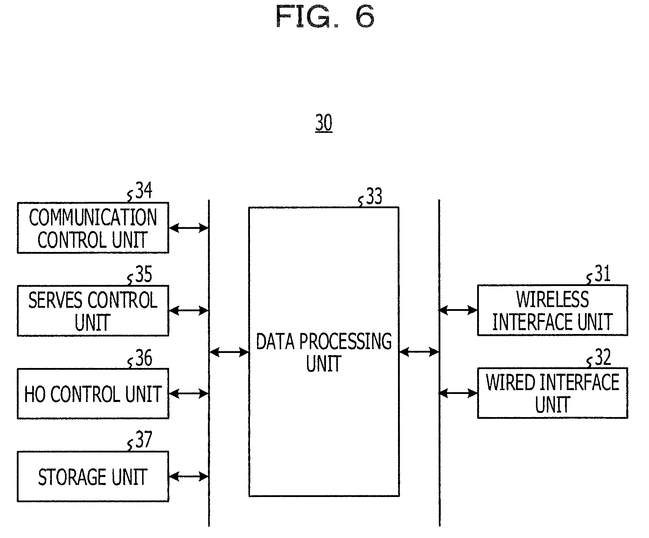

FIG. 6 is a block diagram illustrating an example of the base station according to the first embodiment. In FIG. 6, the base station 30 includes a wireless interface unit 31, a wired interface unit 32, a data processing unit 33, a communication control unit 34, a service control unit 35, a handover (HO) control unit 36, and a storage unit 37. The wireless interface unit 31, the wired interface unit 32, and the data processing unit 33 are connected to each other through a bus. The data processing unit 33, the communication control unit 34, the service control unit 35, the HO control unit 36, and the storage unit 37 are connected to each other through a bus.

The wireless interface unit 31 terminates the L1/L2 protocol and transmits and receives a signal to and from the user terminal 40.

The wired interface unit 32 terminates the L1/L2 protocol and transmits and receives a signal to and from the management apparatus 10 and the gateway 50.

The data processing unit 33 executes processing that is related to routing of a data signal and processing that is related to a transfer protocol of a data signal, on the basis of setting information of a communication channel (that is, a bearer). In addition, the data processing unit 33 extracts a signal that is destined to the base station 30 and outputs the signal to the communication control unit 34 and the service control unit 35.

The communication control unit 34 terminates control signaling between the base station and the user terminal 40 and controls the setting or release of the communication channel in the wireless zone. In addition, the communication control unit 34 controls the user terminal-to-user terminal communication procedure.

For example, the communication control unit 34 receives a setting request of an aggregation communication channel from the management apparatus 10 through the wired interface unit 32, the data processing unit 33, and the service control unit 35. All of the user terminals that correspond to the setting request of the aggregation communication channel are included in an aggregation candidate user terminal group.

The communication control unit 34 selects a representative user terminal from the aggregation candidate user terminal group in accordance with a certain policy (that is, selection criteria) that is stored in the storage unit 37. The representative user terminal is a user terminal in which a communication channel is established between the user terminal and the base station 30 on behalf of the other user terminals in an aggregation group that is constituted by all or a part of the aggregation candidate user terminal group.

As the certain policy, any one of the following (policy 1) to (policy 3) may be used.

(Policy 1) The user terminal 40 in which the quality of the state of a radio link between the user terminal 40 and the base station 30 is the highest in the aggregation candidate user terminal group is selected as the representative user terminal.

(Policy 2) The user terminal 40 that has the largest remaining battery power in the aggregation candidate user terminal group is selected as the representative user terminal.

(Policy 3) The user terminal 40 that is in a powered state in the aggregation candidate user terminal group is selected as the representative user terminal.

Here, in the radio link quality state of the above-described (policy 1), a quality monitoring result that is obtained by grasping the operation in the past by the base station 30 may be used. Information on the remaining battery power in (policy 2) and information on whether or not the user terminal 40 is in the powered state (policy 3) are transmitted so as to be superimposed by a control signaling message that is transmitted from the user terminal 40 to the base station 30.

In addition, the communication control unit 34 selects a certain non-representative user terminal from among the plurality of non-representative user terminals other than the representative user terminal, and sets a user terminal-to-user terminal communication channel between the selected certain non-representative user terminal and the representative user terminal by using the user terminal-to-user terminal communication channel formation procedure. Such processing is executed for each of the non-representative user terminals that are included in the aggregation group.

In addition, the communication control unit 34 transmits information on the aggregation group, which includes pieces of identification information of the representative user terminal and the non-representative user terminals that are included in the aggregation group, to the management apparatus 10.

The service control unit 35 terminates control signaling with the core network side and controls setting, release, and the like of a communication channel other than the wireless zone.

The HO control unit 36 performs determination whether or not handover is allowed to be performed, which is cause by movement of the user terminal 40 or state change of a radio link and controls execution of the handover.

[Configuration of the user terminal]

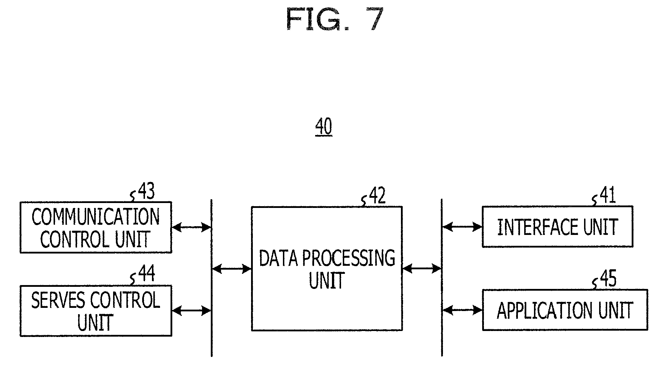

FIG. 7 is a block diagram illustrating an example of the user terminal according to the first embodiment. In FIG. 7, the user terminal 40 includes an interface unit 41, a data processing unit 42, a communication control unit 43, a service control unit 44, and an application unit 45.

The interface unit 41 is an interface between the user terminal 40 and the wireless network and transmits and receives data to and from the base station 30.

The data processing unit 42 executes processing that is related to routing of a data signal and processing that is related to a transfer protocol of a data signal on the basis of setting information of a communication channel (that is, a bearer). In addition, the data processing unit 42 extracts a signal that is destined to the user terminal 40 and outputs the signal to the communication control unit 43, the service control unit 44, and the application unit 45.

The communication control unit 43 terminates control signaling with the base station 30 and controls setting, release, and the like of a communication channel in the wireless zone. In addition, the communication control unit 43 performs setting and management of a user terminal-to-user terminal communication channel between the user terminal 40 and another user terminal, on the basis of an instruction from the base station 30.

For example, in the user terminal 40 that is representative user terminal and the user terminal 40 that is non-representative user terminal, when the communication control unit 43 receives a message through the interface unit 41 and the data processing unit 42, the communication control unit 43 determines whether or not an application that corresponds to an identifier that is included in the message has been started up. When the communication control unit 43 determines that the application is not started up, the communication control unit 43 transmits a response message to reject the request, to the base station 30. In addition, when the communication control unit 43 determines that the application has been started up, the communication control unit 43 transmits a response message permit the request, to the base station 30. Here, a user terminal 40 that is the representative user terminal and a user terminal 40 that is the non-representative user terminal determine that a user terminal-to-user terminal communication channel is allowed to be established between the user terminal 40 and the counter user terminal (that is, the non-representative user terminal or the representative user terminal) that is instructed to form the user terminal-to-user terminal communication channel, by using the reception message, incorporates the determination result into a response message, and transmits the response message to the base station 30. In addition, a parameter that is used to select the above-described representative user terminal, such as a quality of a radio link, remaining battery power, and information that indicates whether or not the user terminal is in the powered state may be included in the response message.

The service control unit 44 terminates control signaling with the core network side and controls setting, release, and the like of a communication channel other than the wireless zone.

The application unit 45 executes a communication application that is used by a user and transmits and receives user data to and from the application server 70 that exists in an external packet network, through the radio access network and the mobile core network.

[Configuration of the gateway]

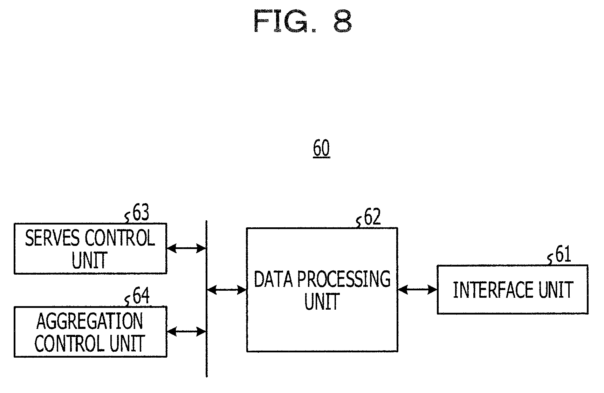

FIG. 8 is a block diagram illustrating an example of the gateway according to the first embodiment. In FIG. 8, the gateway 60 includes an interface unit 61, a data processing unit 62, a service control unit 63, and an aggregation control unit 64.

The interface unit 61 terminates the L1/L2 protocol and transmits and receives a signal to and from the gateway 50 and the application server 70.

The data processing unit 62 executes processing that is related to routing of a data signal and processing that is related to a transfer protocol of a data signal on the basis of setting information of a communication channel (that is, a bearer). In addition, the data processing unit 62 extracts a signal that is destined to the gateway 60 and outputs the signal to the service control unit 63 and the aggregation control unit 64.

The service control unit 63 terminates control signaling in the communication system and controls setting, release, and the like of a communication channel other than the wireless zone.

The aggregation control unit 64 executes communication aggregation on the downlink side on the basis of an instruction from the management apparatus 10. For example, the aggregation control unit 64 receives a setting request of an aggregation communication channel in the downlink through the interface unit 61 and the data processing unit 62. The aggregation control unit 64 sets the data processing unit 62 to an aggregation mode in which a downlink packet that is destined to the non-representative user terminal that is included in the aggregation group is transferred to an aggregation communication channel that is established between the representative user terminal and the application server 70 through the gateway 60, the gateway 50, and the base station 30. Here, in the gateway 60, a transmission source address of a user data packet that passes through the communication channel is monitored in an uplink, and a packet that does not correspond to the address of the user terminal that requests the communication channel (that is, representative user terminal) is discarded as an improper packet. In the above-described aggregation mode, setting to the data processing unit 62, in which a packet that is departed from the non-representative user terminal is removed from the discard target on the uplink side, is included.

[Operation of the communication system]

A processing operation of the communication system 1 that includes the above-described configuration is described below.

<Report processing of location registration>

In the management apparatus 10, when the user terminal 40 executes a location registration or attachment procedure through the base station 30, the movement control management unit 13 forms a report signal that includes identification information of the user terminal 40 that is a location registration target and transmits the report signal to the management server 20 through the interface unit 11.

<Transmission processing of message>

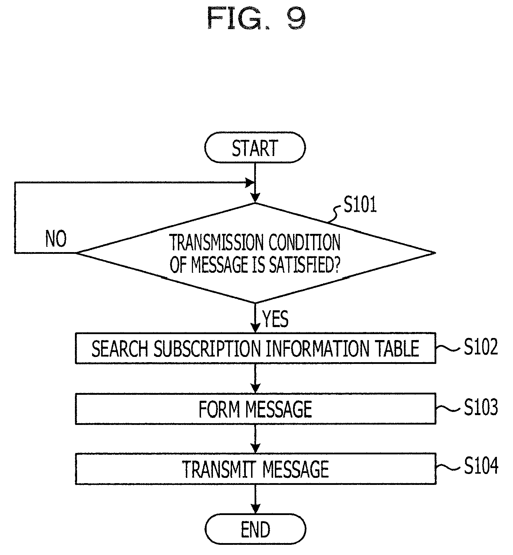

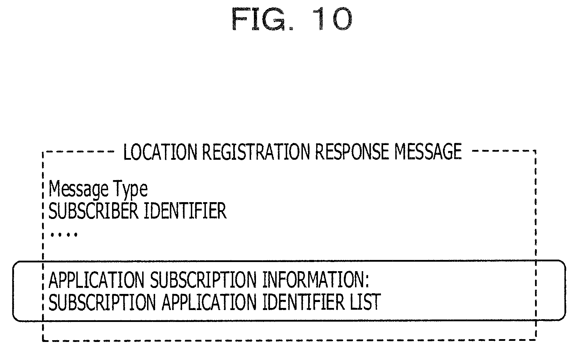

FIG. 9 is a flowchart illustrating an example of transmission processing of a message in the management server according to the first embodiment. In the management server 20, when a transmission condition of a message is satisfied (Yes in Step S101), the protocol processing unit 22 searches a subscription information table that is stored in the holding unit 23 on the basis of identification information of the user terminal 40 that is a search target (Step S102). Therefore, the protocol processing unit 22 obtains application subscription information of the user terminal 40 that is a search target and forms a message that includes the obtained application subscription information (Step S103). In addition, the interface unit 21 transmits the message that is formed in the protocol processing unit 22 to the management apparatus 10 (Step S104). When the transmission condition of a message is not satisfied (No in Step S101), it is determined whether or not the transmission condition of a message is satisfied, again. FIG. 10 is a diagram illustrating an example of a message that is transmitted from the management server to the management apparatus. In FIG. 10, as the message, a location registration response message is used.

Here, for example, the transmission condition of a message is that a report signal is received from the management apparatus 10 or change processing of application subscription information occurs. In addition, the application subscription information includes identification information of the user terminal 40 that is a search target and identification information of an application that is installed in the user terminal 40 that is a search target.

<Obtaining processing and holding processing of application subscription information>

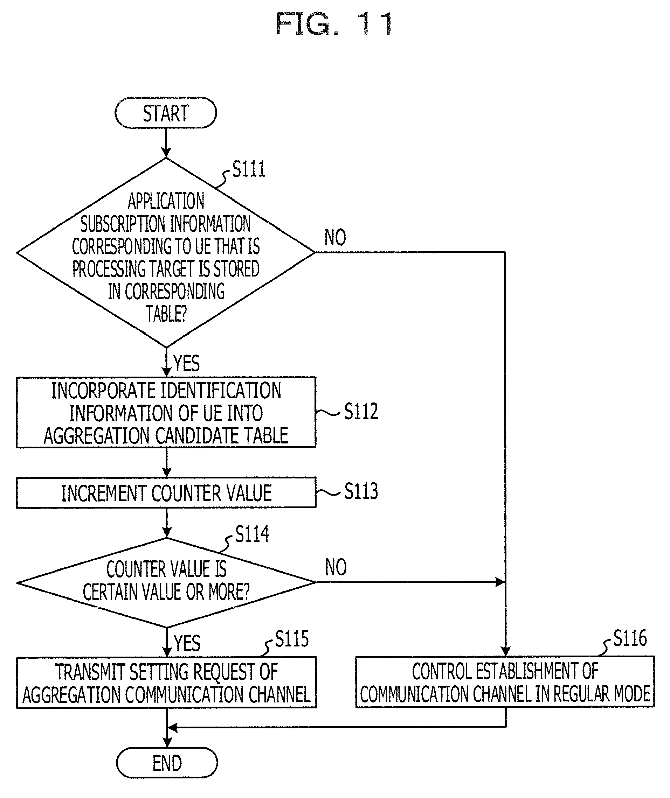

FIG. 11 is a flowchart illustrating an example of obtaining processing and holding processing of application subscription information in the management apparatus according to the first embodiment. In the management apparatus 10, the service control unit 12 receives a message from the management server 20 through the interface unit 11 and causes the storage unit 15 to store application subscription information that is included in the message.

<First setting processing of communication channel>

When a setting procedure of a communication channel that is related to the user terminal 40 that is a processing target occurs, the following processing is executed in the management apparatus 10. The occurrence of the setting procedure of a communication channel is checked, for example, when a communication request by the user terminal 40 that is a processing target is received by the management apparatus 10 through the base station 30 under the domination of which the user terminal 40 that is a processing target exists.

That is, in the management apparatus 10, the service control unit 12 determines whether or not application subscription information that corresponds to the user terminal 40 that is a processing target is stored in the correspondence table in the storage unit 15 (Step S111).

When the service control unit 12 determines that the application subscription information is stored in the correspondence table (Yes in Step S111), the aggregation control unit 14 incorporates identification information of the user terminal 40 that is a processing target into the corresponding aggregation candidate table (Step S112). In addition, the aggregation control unit 14 increments, by one, a counter value of the aggregation candidate table into which the identification information of the user terminal 40 that is a processing target is incorporated (Step S113). Here, the aggregation candidate table is provided for each combination of identification information of an application that is installed in the user terminal 40, the base station 30 under the domination of which the user terminal 40 exists, the gateway 60 in which the communication channel of the user terminal 40 is accommodated. Therefore, when the user terminal 40 that is a processing target and the base station 30 through which a communication request from the user terminal 40 that is a processing target passes are identified, the aggregation candidate table into which identification information of the user terminal 40 that is a processing target is to be incorporated is also identified.

The aggregation control unit 14 determines whether or not the counter value is a certain value or more (Step S114).

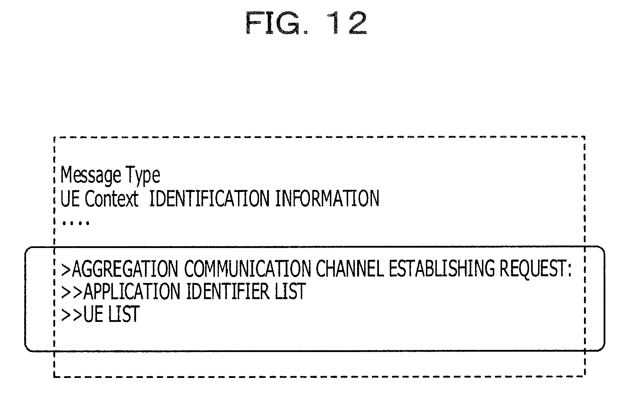

When the aggregation control unit 14 determines that the counter value is the certain value or more (Yes in Step S114), the aggregation control unit 14 transmits a setting request of an aggregation communication channel to the base station 30 that corresponds to the aggregation candidate table in which the counter value is the certain value or more (Step S115). Therefore, the setting of an aggregation communication channel is instructed. In addition, pieces of identification information of all of the user terminals 40 that are included in the aggregation candidate table in which the counter value is the certain value or more are included in the setting request of an aggregation communication channel. FIG. 12 is a diagram illustrating an example of a message that includes the setting request of an aggregation communication channel.

When the application subscription information that corresponds to the user terminal 40 that is a processing target is not stored in the correspondence table (No in Step S111) or when the counter value of the aggregation candidate table is less than the certain value (No in Step S114), the aggregation control unit 14 controls to form a communication channel in the regular communication mode for the user terminal 40 that is a processing target (Step S116).

<First formation processing of aggregation communication channel>

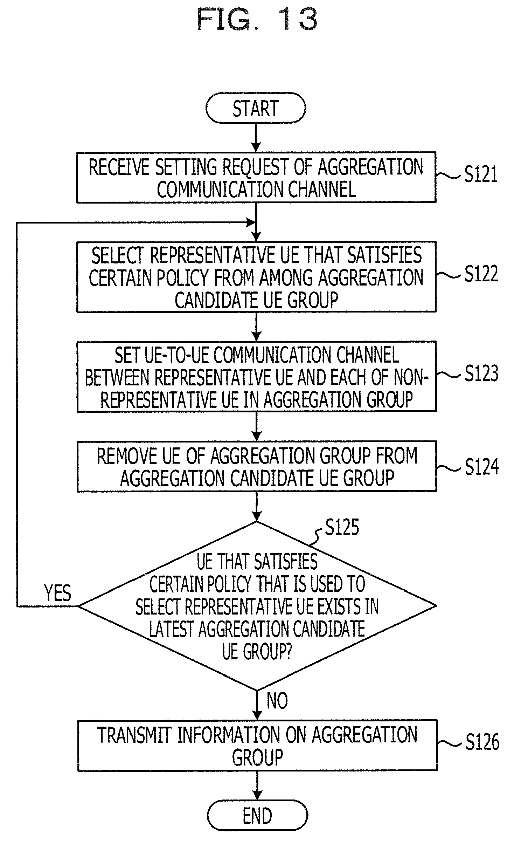

FIG. 13 is a flowchart illustrating an example of formation processing of an aggregation communication channel in the base station according to the first embodiment. In the base station 30, the communication control unit 34 receives a setting request of an aggregation communication channel, which is transmitted from the management apparatus 10 through the wired interface unit 32, the data processing unit 33, and the service control unit 35 (Step S121). Here, all of the user terminals that correspond to the setting request of an aggregation communication channel are included in the aggregation candidate user terminal group.

The communication control unit 34 selects a representative user terminal from among the aggregation candidate user terminal group in accordance with a certain policy (that is, selection criteria) that is stored in the storage unit 37 (Step S122).

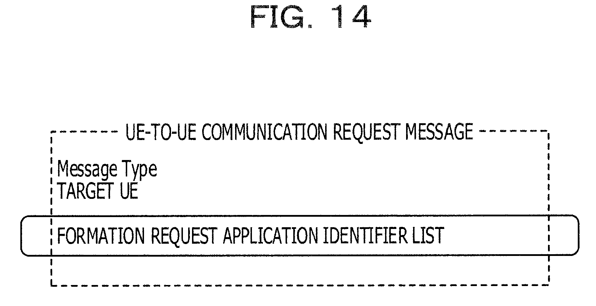

First, the communication control unit 34 selects a certain non-representative user terminal from among the plurality of the non-representative user terminals other than the representative user terminal and sets a user terminal-to-user terminal communication channel between the selected certain non-representative user terminal and the representative user terminal by using the user terminal-to-user terminal communication channel formation procedure (Step S123). For example, the communication control unit 34 forms a message that includes an identifier of an application that is common in the aggregation group and pieces of identification information of the selected certain non-representative user terminal and the representative user terminal (for example, a MAC address). FIG. 14 is a diagram illustrating an example of a message that is transmitted from the base station to the user terminal in the communication channel formation procedure. In addition, the communication control unit 34 transmits the formed message to the selected certain non-representative user terminal and the representative user terminal through the data processing unit 33 and the wireless interface unit 31. In addition, in the user terminal 40 that is a representative user terminal and the user terminal 40 that is a non-representative user terminal, when the communication control unit 43 receives a message through the interface unit 41 and the data processing unit 42, the communication control unit 43 determines whether or not an application that corresponds to an identifier that is included in the message has been started up. When the communication control unit 43 determines that the application is not started up, the communication control unit 43 transmits a response message to reject the request, to the base station 30. In addition, the communication control unit 43 determines that the application has been started up, the communication control unit 43 transmits a response message to permit the request, to the base station 30. In addition, in the base station 30, when the communication control unit 34 receives the response message from the representative user terminal or the non-representative user terminal, the communication control unit 34 transmits a message that corresponds to the contents of the response message, to the representative user terminal or the non-representative user terminal. When each other's pieces of identification information are shared between the non-representative user terminal and the representative user terminal each of which permits the request as described above, a communication channel is established between the user terminals. The above-described processing is executed for each of non-representative user terminals that belong to a single aggregation group.

The communication control unit 34 removes the user terminals of the aggregation group, which have been already aggregated, from the original aggregation candidate user terminal group (Step S124), and determines whether or not the user terminal that satisfies the certain policy that is used to select representative user terminal exists in the obtained latest aggregation candidate user terminal group (Step S125).

When the communication control unit 34 determines that the user terminal exists in the latest aggregation candidate user terminal group (Yes in Step S125), the above-described user terminal-to-user terminal communication channel formation procedure is executed for the aggregation group that includes the representative user terminal and the plurality of non-representative user terminals. That is, the processing through Step S122 to Step S124 is executed.

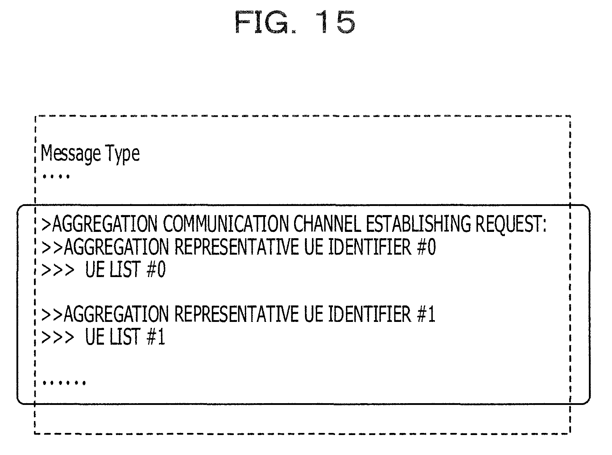

In addition, when the communication control unit 34 determines that the user terminal does not exist in the latest aggregation candidate user terminal group (No in Step S125), the communication control unit 34 transmits information on the aggregation group, which includes pieces of identification information of the representative user terminal and the non-representative user terminals that are included in the aggregation group, to the management apparatus 10 (Step S126). FIG. 15 is a diagram illustrating an example of a message that includes information on an aggregation group.

<Second setting processing of communication channel>

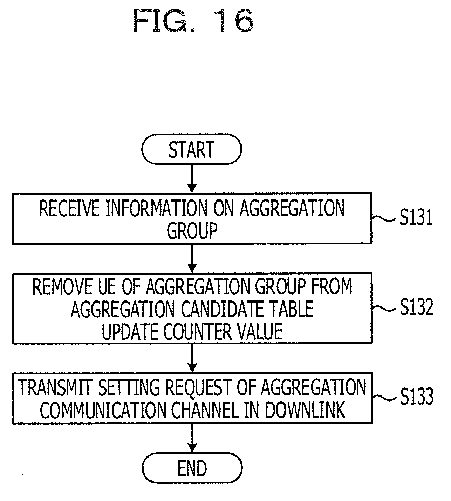

FIG. 16 is a flowchart illustrating an example of setting processing of a communication channel in the management apparatus according to the first embodiment. In the management apparatus 10, the aggregation control unit 14 receives information on an aggregation group from the base station 30 through the interface unit 11 and the service control unit 12 (Step S131). The information on the aggregation group is transmitted from the base station 30 as a response to a setting request of an aggregation communication channel.

The aggregation control unit 14 removes pieces of identification information of representative user terminal and all of non-representative user terminals, which are included in the received information on the aggregation group, from the corresponding aggregation candidate table, and subtracts the number of removed user terminals from the counter value of the aggregation candidate table (Step S132). Here, the user terminals that are removed from the aggregation candidate table are registered in the aggregation table, and it is recorded, to the aggregation table, that the user terminals are in a state of operating in the aggregation mode.

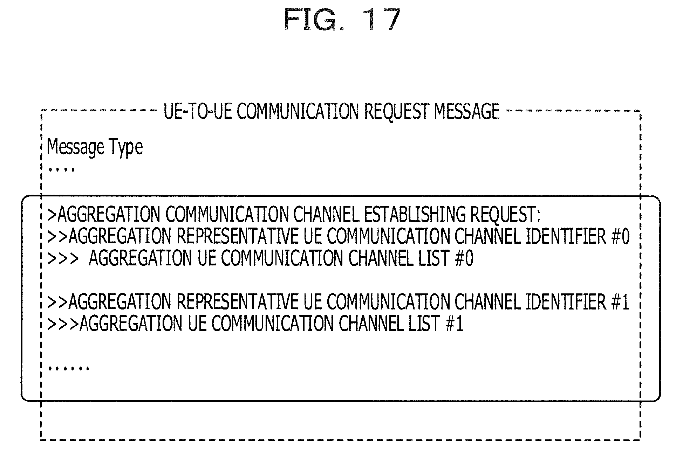

The aggregation control unit 14 forms a setting request of an aggregation communication channel in the downlink on the basis of the received information on the aggregation group and transmits the formed setting request to the gateway 60 (Step S133). Here, the setting request of an aggregation communication channel in the downlink is transmitted to the gateway 50 through the service control unit 12 and the interface unit 11, and transferred from the gateway 50 to the gateway 60. FIG. 17 is a diagram illustrating an example of a message that includes a setting request of an aggregation communication channel in the downlink.

<Formation processing of aggregation communication channel>

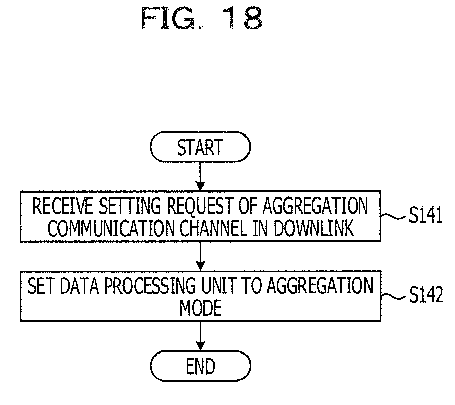

FIG. 18 is a flowchart illustrating an example of formation processing of an aggregation communication channel in the gateway according to the first embodiment. In the gateway 60, the aggregation control unit 64 receives a setting request of an aggregation communication channel in the downlink through the interface unit 61 and the data processing unit 62 (Step S141).

The aggregation control unit 64 sets the data processing unit 62 to the aggregation mode in which a downlink packet that is destined to the non-representative user terminal that is included in the aggregation group is transferred to an aggregation communication channel that is established between the representative user terminal and the application server 70, through the gateway 60, the gateway 50, and the base station 30, and an uplink packet that is transmitted from the non-representative user terminals is caused to pass through the aggregation communication channel, and each of the uplink packets and the downlink packets is counted for each of the non-representative user terminals, separately from a representative user terminal packet (Step S142). Such counting is performed for billing data.

<Change processing and release processing of user terminal-to-user terminal communication channel>

In the base station 30, when the quality of a user terminal-to-user terminal communication channel is not ensured because the user terminal 40 in the aggregation group moves, the communication control unit 34 executes, for example, change of a representative user terminal and a user terminal-to-user terminal communication channel or release of the user terminal-to-user terminal communication channel the quality of which is not ensured.

The communication control unit 34 notifies the management apparatus 10 of information on the changed representative user terminal and non-representative user terminal or non-representative user terminal that corresponds to the released user terminal-to-user terminal communication channel.

<Change control processing and release control processing of aggregation communication channel in the downlink>

In the management apparatus 10, the aggregation control unit 14 receives a change notification of an aggregation communication channel or a release notification of an aggregation communication channel, through the interface unit 11 and the service control unit 12. Here, the change notification of the aggregation communication channel includes information on the aggregation group, which includes pieces of identification information of the changed representative user terminal and the non-representative user terminals. In addition, the release notification of the aggregation communication channel includes pieces of identification information of all of the user terminals that are included in the aggregation group that corresponds to the releases aggregation communication channel.

The aggregation control unit 14 updates the aggregation candidate table, the counter value, and the aggregation table on the basis of the change notification or release notification of the aggregation communication channel.

The aggregation control unit 14 forms a change request or a release request of the aggregation communication channel in the downlink on the basis of the change notification or release notification of the aggregation communication channel, and transmits the formed change request or release request of the aggregation communication channel in the downlink to the gateway 60. Here, the change request or release request of the aggregation communication channel in the downlink is transmitted to the gateway 50 through the service control unit 12 and the interface unit 11 and transferred from the gateway 50 to the gateway 60. In addition, each of the change request and release request of the aggregation communication channel in the downlink includes pieces of identification information of all of the user terminals, which are included in the change notification or release notification.

<Release processing of downlink aggregation communication channel>

In the gateway 60, the aggregation control unit 64 receives a release request of an aggregation communication channel in the downlink from the management apparatus 10 through the interface unit 61, the data processing unit 62, and the service control unit 63.

The aggregation control unit 64 sets the data processing unit 62 to the regular mode in which a packet is transferred by using a communication channel for each user terminal 40 that is included in the release request. That is, a communication for an aggregation group that is included in the release request is changed from the aggregation mode to the regular mode.

As described above, in the first embodiment, in the management apparatus 10, the aggregation control unit 14 exists under the domination of the base station 30 and selects a group that is constituted by a plurality of user terminals 40 in which an identical type of applications are installed.

Therefore, the base station 30 may select a group that is a population from which representative user terminal is selected in which an aggregation communication channel is established between the application server 70 and the representative user terminal, on behalf of the other user terminals. In addition, the number of communication channels in the radio access network and the core network may be reduced because the non-representative user terminal may perform communication by using the aggregation communication channel that is established between the representative user terminal that is selected from the group by the base station 30 and the application server 70, so that the number of control signals may be reduced.

In addition, in the target base station 30 in which an aggregation communication channel is established, a signaling amount is a certain value or more. That is, the target base station 30 is a base station in which the convergence occurs easily.

Alternatively, in the target base station 30 in which an aggregation communication channel is established, a movement frequency of the user terminal 40 that exists under the domination of the base station 30 is less than a certain value.

Therefore, the base stations 30 that are to be targets are narrowed down to a specific base station, so that a processing load of the management apparatus 10 may be reduced.

In addition, in the base station 30, the communication control unit 34 selects an aggregation group that includes a representative user terminal in which a communication channel is established between the representative user terminal and the application server 70 on behalf of the other user terminals and a plurality of non-representative user terminals that are represented by the representative user terminal, from the aggregation candidate user terminal group in which an identical type of applications are installed. In addition, the communication control unit 34 forms a first control signal that is used to instruct to establish an aggregation communication channel between the representative user terminal and the base station 30, and a second control signal that is used to instruct to establish a user terminal-to-user terminal communication channel between the representative user terminal and each of the non-representative user terminals. The first control signal and the second control signal are transmitted to the representative user terminal and each of the non-representative user terminals.

In addition, the representative user terminal has the highest quality of a radio link between the representative user terminal and the base station 30, in the group. Alternatively, the representative user terminal has the largest remaining battery power in the group. Alternatively, the representative user terminal is one of the user terminals that are in the powered state in the group.

Therefore, a user terminal the state of which is excellent and to which aggregation processing is not burdensome may be set as a representative user terminal, so that aggregation communication may be stabilized and the reliability may be improved.

Therefore, an aggregation communication channel and a user terminal-to-user terminal communication channel may be established under the leadership of the base station 30. Therefore, the number of communication channels in the radio access network and the core network may be reduced, so that the number of control signals may be reduced.

In addition, in the user terminal 40, the communication control unit 43 receives a control signal that includes identification information of the application from the base station 30 when the user terminal 40 is a candidate of the representative user terminal or a candidate of the non-representative user terminal. In addition, the communication control unit 43 forms a control signal to reject participation in an aggregation group, for the base station 30 when the application is not started up. The formed control signal is transmitted to the base station 30.

Therefore, the user terminal 40 that is not desired to be aggregated may be removed from the aggregation group on the basis of the operation state of the application, so that the aggregation group with high contribution to reduction in the control signal may be formed efficiently.

In addition, in the gateway 60, the data processing unit 62 transfers a packet that is transmitted from the application server 70 and the destination of which corresponds to any of the plurality of non-representative user terminals, to the aggregation communication channel in the downlink.

Therefore, even in the downlink, the number of communication channels in the radio access network and the core network may be reduced, so that the number of control signals may be reduced.

In addition, an aggregation function of a communication channel is employed in an existing apparatus, so that introduction cost and installation cost in the apparatus may be reduced.

[Second embodiment]

In the first embodiment, the description is made above on the assumption that information on an aggregation communication channel in the uplink is reported to the gateway 60 from the base station 30 through the management apparatus 10 as a control signal, and the gateway 60 forms an aggregation communication channel in a downlink on the basis of the information, and the embodiments are not limited to such a case. A management apparatus, a management server, a base station, user terminals, a gateway, an application server 70 according to a second embodiment are similar to the management apparatus 10, the management server 20, the base station 30, the user terminal 40-1 to user terminal 40-4, the gateways 50 and 60, and the application server 70 according to the first embodiment. Therefore, a description is made below with the aid of FIGs. 4 to 8.

In the second embodiment, transmission of an aggregation communication channel in the uplink to the gateway 60 through the management apparatus 10 is not performed by the base station 30. Instead of this, the gateway 60 executes the following processing. That is, the gateway 60 monitors a transmission source address of an uplink packet. In addition, the gateway 60 determines an address other than that of a user terminal that holds a communication channel (that is, representative user terminal) as an address of non-representative user terminal. The gateway 60 autonomously sets an aggregation group by using the address of the non-representative user terminal. In this case, in order to reduce transfer risk of an improper packet, when a communication channel is established for the user terminal 40 that receives application subscription information (see FIG. 10) from the management server 20, the management apparatus 10 instructs the gateway 60 to apply the aggregation mode to the communication channel to be established, through the gateway 50. In addition, the gateway 60 performs aggregation mode setting based on the transmission source address monitoring, merely on the communication channel that has received the instruction.

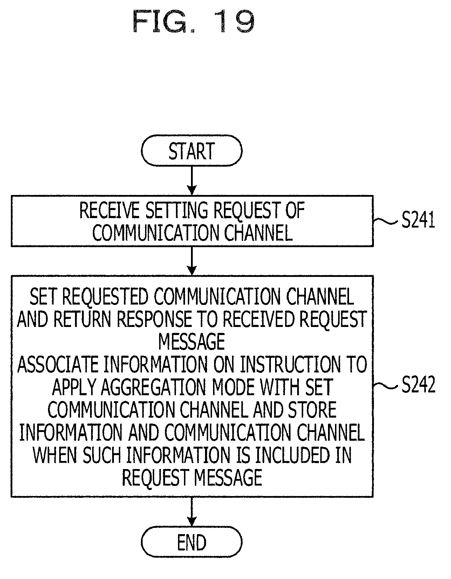

FIG. 19 is a flowchart illustrating an example of communication channel establishing in the gateway according to the second embodiment at the time of attachment of the user terminal. In the gateway 60, the service control unit 63 receives a communication channel establishing request from the user terminal 40 through the interface unit 61 and the data processing unit 62 (Step S241).

The service control unit 63 sets a communication channel that corresponds to the communication channel establishing request and returns a response to the communication channel establishing request after the setting. When a message that includes the received communication channel establishing request includes an instruction to apply the aggregation mode, the service control unit 63 associates the communication channel establishing request with the set communication channel and stores the associated request and the communication channel in the aggregation control unit 64 (Step S242).

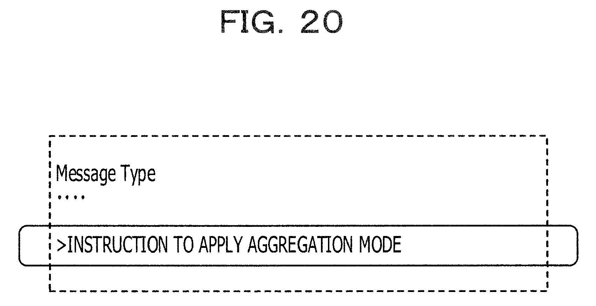

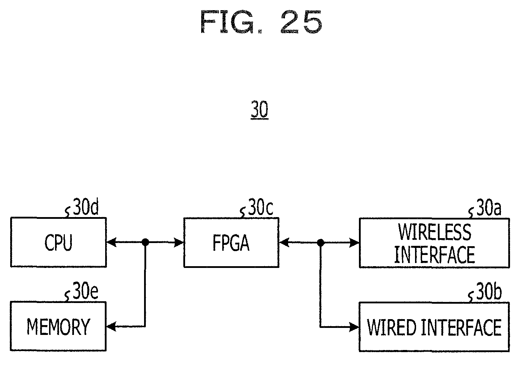

Here, the communication channel establishing request is transferred from the management apparatus 10 to the gateway 60 through the gateway 50. FIG. 20 is a diagram illustrating an example of a message that includes a communication channel establishing request. The management apparatus 10 transmits application subscription information (FIG. 10) that is received from the management server 20 and a message that includes information on the instruction to apply the aggregation mode (see FIG. 25), to the gateway 60.

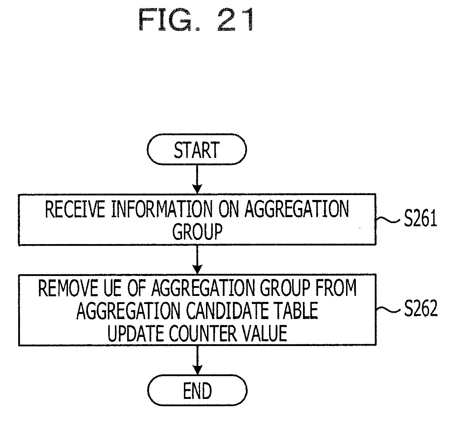

FIG. 21 is a flowchart illustrating an example of setting processing of a communication channel in the management apparatus according to the second embodiment. In the management apparatus 10, the aggregation control unit 14 receives information on an aggregation group from the base station 30 through the interface unit 11 and the service control unit 12 (Step S261). The information on the aggregation group is information that is transmitted from the base station 30 as a response to a setting request of an aggregation communication channel.

The aggregation control unit 14 removes pieces of identification information of the representative user terminal and all of non-representative user terminals, which are included in the received information on the aggregation group, from the corresponding aggregation candidate table, subtracts the number of removed user terminals from the counter value of the aggregation candidate table, and updates the aggregation table (Step S262). Here, the user terminals that are removed from the aggregation candidate table are registered to the aggregation table, and it is recorded, to the aggregation table, that the terminals are in a state of operating in the aggregation mode.

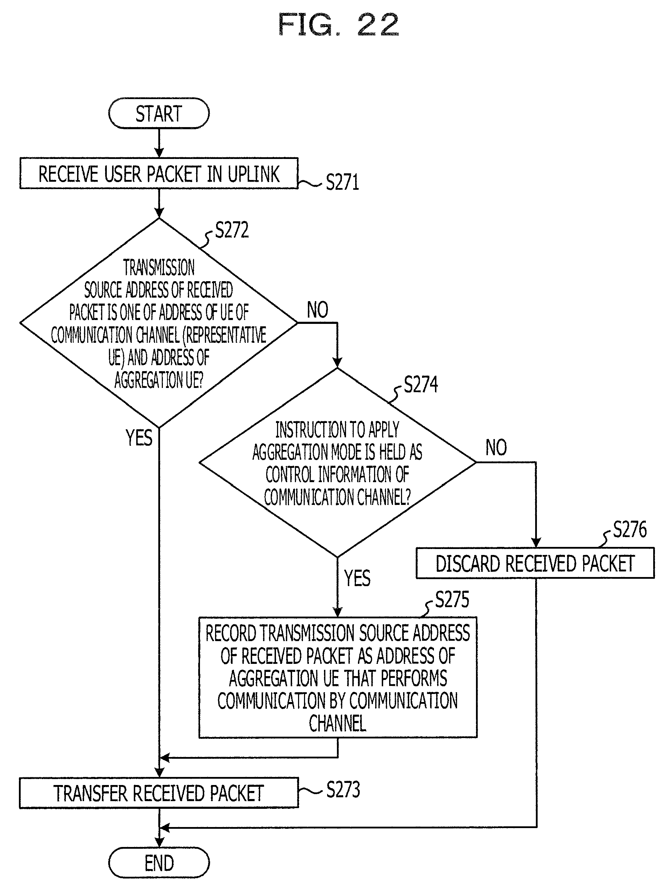

FIG. 22 is a flowchart illustrating an example of formation processing of an aggregation communication channel in the gateway according to the second embodiment.

The gateway 60 receives a user packet in the uplink (Step S271) and determines whether or not a transmission source address of the received packet is one of an address of a user terminal that holds a communication channel (that is, representative user terminal) and an address of aggregation user terminal (that is, non-representative user terminal) (Step S272).

When the transmission source address is one of an address of a representative user terminal and an address of non-representative user terminals (Yes in Step S272), the gateway 60 transfers the packet to the application server 70 (Step S273).

When the transmission source address is not one of an address of the representative user terminal and an address of the non-representative user terminal (No in Step S272), the gateway 60 checks whether or not the instruction to apply the aggregation mode is stored in the packet as control information of the communication channel (Step S274).

When the instruction to apply the aggregation mode is stored in the packet (Yes in Step S274), the gateway 60 records the transmission source address of the received packet as an address of an aggregation target user terminal in which communication is performed through the communication channel (Step S275). In addition, the gateway 60 transfers the received packet to the application server 70 (Step S273). When the instruction to apply the aggregation mode is not stored in the packet (No in Step S274), the gateway 60 discards the received packet (Step S276).

### [Other embodiments]

[1] The management apparatus 10, the management server 20, the base station 30, the user terminal 40, and the gateway 60 according to the first embodiment and the second embodiment may be realized by the following hardware configuration.

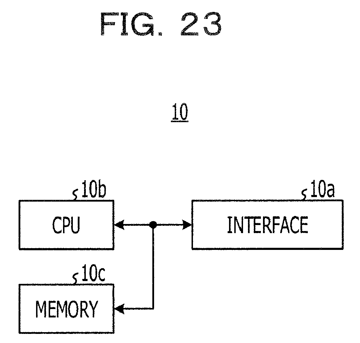

FIG. 23 is a diagram illustrating a hardware configuration of the management apparatus. As illustrated in FIG. 23, the management apparatus 10 includes an interface 10a, a central processing unit (CPU) 10b, and a memory 10c as hardware. The memory 10c is constituted, for example, by a random access memory (RAM) such as a synchronous dynamic random access memory (SDRAM), a read only memory (ROM), or a flash memory. The interface unit 11 corresponds to the interface 10a, and the storage unit 15 corresponds to the memory 10c. The service control unit 12, the movement control management unit 13, and the aggregation control unit 14 are realized by the CPU 10b.

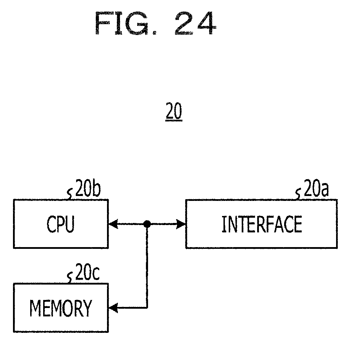

FIG. 24 is a diagram illustrating a hardware configuration of the management server. As illustrated in FIG. 24, the management server 20 includes an interface 20a, a CPU 20b, and a memory 20c as hardware. The memory 20c is constituted, for example, by a RAM such as an SDRAM, a ROM, or a flash memory. The interface unit 21 corresponds to the interface 20a, and the holding unit 23 corresponds to the memory 20c. The protocol processing unit 22 is realized by the CPU 20b.

FIG. 25 is a diagram illustrating a hardware configuration of the base station. As illustrated in FIG. 25, the base station 30 includes a wireless interface 30a, a wired interface 30b, a field programmable gate array (FPGA) 30c, a CPU 30d, and a memory 30e as hardware. The memory 30e is constituted, for example, by a RAM such as an SDRAM, a ROM, or a flash memory. The wireless interface unit 31 and the wired interface unit 32 correspond to the wireless interface 30a and the wired interface 30b, respectively. The storage unit 37 corresponds to the memory 30e. The data processing unit 33 is realized by the FPGA 30c. The communication control unit 34, the service control unit 35, and the HO control unit 36 are realized by the CPU 30d.

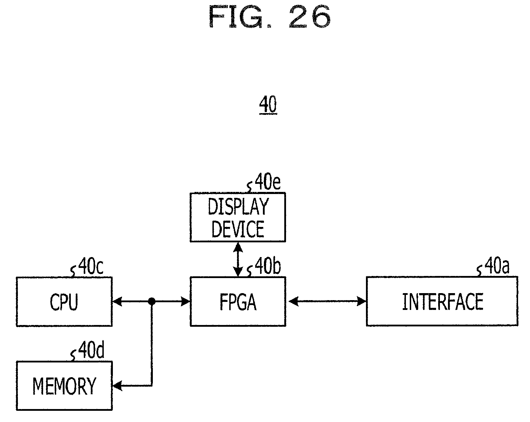

FIG. 26 is a diagram illustrating a hardware configuration of the user terminal. As illustrated in FIG. 26, the user terminal 40 includes an interface 40a, an FPGA 40b, a CPU 40c, a memory 40d, and a display device 40e as hardware. The memory 40d is constituted, for example, by a RAM such as an SDRAM, a ROM, or a flash memory. The interface unit 41 corresponds to the interface 40a. The display device 40e is, for example, a liquid crystal display (LCD). The data processing unit 42 is realized by the FPGA 40b. The communication control unit 43, the service control unit 44, and the application unit 45 are realized by the CPU 40c.

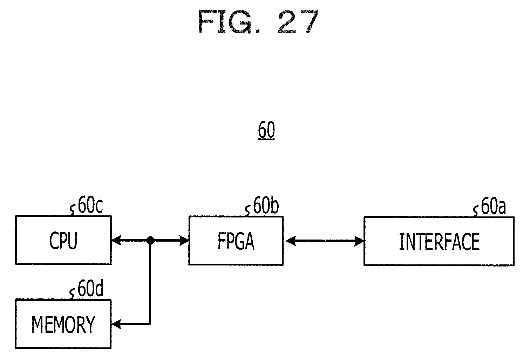

FIG. 27 is a diagram illustrating a hardware configuration of the gateway. As illustrated in FIG. 27, the gateway 60 includes an interface 60a, an FPGA 60b, a CPU 60c, and a memory 60d as hardware. The memory 60d is constituted, for example, by a RAM such as an SDRAM, a ROM, or a flash memory. The interface unit 61 corresponds to the interface 60a. The data processing unit 62 is realized by the FPGA 60b. The service control unit 63 and the aggregation control unit 64 are realized by the CPU 60c.

[2] In the first embodiment and the second embodiment, the description is made above by using the user terminal 40 as an example. However, the embodiments are not limited to such an example, and the embodiments of the invention may comprise a communication apparatus under the domination of a base station.

## Claims

1. A communication method performed in a communication system including a base station and a plurality of terminals, the communication method comprising:
transmitting, by the base station, a first signal specifying a representative terminal of an aggregation group to which member terminals of the plurality of terminals belongs, each of the member terminals on which common application is installed in common; and
relaying, by the representative terminal, communications associated with the common application between a server apparatus and one or more non-representative terminals other than the representative terminal of the member terminals, the server apparatus providing service for the common application.

2. A communication method according to claim 1 further comprising:
obtaining application information indicating applications that are installed on each of the plurality of terminals; and
determining the aggregation group in accordance with the application information.

3. A communication method according to claim 1 or 2 further comprising:
transmitting, by a management apparatus coupled to the base station, a second signal to establish a first communication channel between the representative terminal and the base station , to the base station.

4. A communication method according to any preceding claim further comprising:
transmitting, by a management apparatus coupled to the base station, a further signal to establish a second communication channel between the base station and a gateway apparatus which relays the communications, to the gateway apparatus.

5. A communication method according to any preceding claim further comprising:
receiving, by a terminal other than the member terminals of the plurality of terminals, a request to join the aggregation group; and
rejecting or accepting the request to join the aggregation group based on whether the common application is active on the terminal.

6. A communication method according to any preceding claim further comprising:
counting amounts of the communication for each of the member terminals, on one of apparatus between the base station and the server apparatus.

7. A communication method according to any preceding claim, wherein
the common application receives service from only the server apparatus.

8. A communication method according to any preceding claim, wherein
only one bearer which is logical channel is associated with the common application.

9. A base station comprising:
a first transmitting unit to transmit a first signal specifying a representative terminal of an aggregation group to which member terminals of the plurality of terminals belongs, each of the member terminals on which common application is installed in common;
a first receiving unit to receive first communications relayed by the representative terminal, the first communication being transmitted for a server apparatus from one or more non-representative terminals other than the representative terminal of the member terminals, the first communications being associated with the common application, the server apparatus providing service for the common application;
a second transmitting unit to transmit the first communications for the server apparatus; and
a second receiving unit to receive second communications being transmitted for the one or more non-representative terminals from the server apparatus, the second communications being associated with the common application;
wherein the first transmitting unit transmits the second communication to be relayed by the representative terminal, to the representative terminals.

10. A management apparatus in a communication system including a base station and a plurality of terminals, the management apparatus comprising:
an obtaining unit to obtain application information indicating applications that are installed on each of the plurality of terminals; and
a determining unit to determine a aggregation group in accordance with the application information, the aggregation group to which member terminals of the plurality of terminals belongs, each of the member terminals on which common application are installed in common;
wherein a representative terminal of an aggregation group relays communications associated with the common application between a server apparatus and non-representative terminals other than the representative terminal of the member terminals, and the server apparatus provides service for the common application.
